# EUROPEAN PATENT APPLICATION

(11) **EP 4 123 744 A1**
(43) Date of publication of application: **25.01.2023**
(21) Application number: 21772522.5
(22) Date of filing: 14.01.2021
(51) Int. Cl.: H01M 4/02, H01M 4/13, H01M 10/052, H01M 10/0566

(54) **ELECTRODE FOR BATTERIES, AND BATTERY**

(30) Priority: 19.03.2020 JP 2020049201
(71) Applicant: Panasonic Intellectual Property Management Co., Ltd., Osaka-shi, Osaka 540-6207 (JP)
(72) Inventor: TAKAYAMA, Yosuke, Chuo-ku, Osaka-shi, Osaka 540-6207 (JP); KUROMIYA, Takao, Chuo-ku, Osaka-shi, Osaka 540-6207 (JP); MAEDA, Satoru, Chuo-ku, Osaka-shi, Osaka 540-6207 (JP); OKIMOTO,Rikiya, Chuo-ku, Osaka-shi, Osaka 540-6207 (JP)
(74) Representative: Novagraaf International SA
(86) International application number: PCT/JP2021/000959
(87) International publication number: WO 2021/186864

(57) **Abstract**

This electrode for batteries is provided with: a core material; and a mixture layer which contains an active material and a binder, while being arranged on the surface of the core material. If the mixture layer is trisected in the thickness direction and the divided sections are defined as the first region, the second region and the third region sequentially from the core material side, the void fraction of the second region is higher than the void fraction of the first region.

## Description

### TECHNICAL FIELD

The present disclosure relates to a battery electrode and a battery that includes this electrode.

### BACKGROUND

Electrodes for lithium ion batteries or other batteries are typically produced through a wet process which comprises applying electrode mixture slurry that contains, for example, an active material and a binder to the surface of a core which is metal foil, and drying and compressing the applied film (see, for example, Patent Literature 1). This causes migration in which the binder migrates from the core side toward the surface side during the drying of the applied film. As the amount of the binder in the vicinity of the surface is increased compared to that in the vicinity of the core, the binder tends to be unevenly distributed in the thickness direction. The applied film includes voids, for example, between particles of the active material. When the applied film is compressed, the voids decrease as the particles of the active material move. However, because the applied film is fixed to the core, the closer to the core, the more difficult for the mixture to move and the more voids remain; as such, the voids tend to be unevenly distributed in the thickness direction.

In recent years, there are also proposed methods of producing an electrode by rolling and molding an electrode mixture into a sheet and then laminating this sheet to a core (see, for example, Patent Literatures 2 and 3). Patent Literature 2 discloses a method of increasing the density after lamination of a compressed powder layer to a core, the method comprising applying greater pressure between a pair of rolls that press a laminate of the compressed powder layer and the core than pressure applied between a pair of rolls that press electrode mixture powder to prepare the compressed powder layer. Patent Literature 3 discloses a method comprising molding a granulated product composed of a mixture of an active material, a thickener, a solvent, and a binder into a sheet and disposing this sheet on a core.

### CITATION LIST

### PATENT LITERATURE

Patent Literature 1: Japanese Unexamined Patent Application Publication No. 2005-056743
Patent Literature 2: Japanese Unexamined Patent Application Publication No. 2013-77560
Patent Literature 3: Japanese Unexamined Patent Application Publication No. 2015-138658

### SUMMARY

The methods disclosed in Patent Literatures 2 and 3 can eliminate or simplify the step of drying the mixture layer, and are expected to address problems of the wet process described above. However, the methods disclosed in Patent Literatures 2 and 3 still have significant room for improvement, as they are similar to the wet process in that the porosity tends to be unevenly distributed in the thickness direction of a mixture layer. In response to the formation of a porosity distribution having more voids in regions of the mixture layer that are closer to the core or, in other words, less voids in regions of the mixture layer that are closer to the surface, the penetration of an electrolyte solution into the mixture layer is impaired, leading to, for example, a decrease in high rate characteristics. Under specific process conditions disclosed in Patent Literatures 2 and 3, it is difficult to increase the density of the mixture layer.

According to an aspect of the present disclosure, there is provided a battery electrode comprising a core; and a mixture layer containing an active material and a binder, the mixture layer being disposed on a surface of the core, wherein assuming that the mixture layer is divided into three equal parts in a thickness direction, the three equal parts being defined as a first region, a second region, and a third region in that order from a side on which the core is located, a porosity of the second region is higher than a porosity of the first region.

According to another aspect of the present disclosure, there is provided a battery comprising the above-described battery electrode and an electrolyte solution.

An embodiment of the present disclosure can provide a battery electrode that includes a mixture layer with good penetration of the electrolyte solution. A battery that includes an electrode according to the present disclosure has, for example, excellent high rate performance.

### BRIEF DESCRIPTION OF DRAWINGS

FIG. 1 is a cross-sectional view of a battery according to an example embodiment.
FIG. 2 is a cross-sectional view of a positive electrode according to an example embodiment.
FIG. 3 illustrates a relationship between the density of a positive electrode mixture layer and the penetration of a non-aqueous electrolyte solution.
FIG. 4 illustrates a method of manufacturing a positive electrode according to a first embodiment.
FIG. 5 illustrates a method of manufacturing a positive electrode according to a second embodiment.
FIG. 6 illustrates a method of manufacturing a positive electrode according to a third embodiment.
FIG. 7 illustrates a method of manufacturing a positive electrode according to a fourth embodiment.
FIG. 8 illustrates a method of manufacturing a positive electrode according to a fifth embodiment.

### DESCRIPTION OF EMBODIMENTS

Embodiments of a battery electrode according to the present disclosure will now be described in detail. The embodiments described below are merely illustrative, and the present disclosure is not limited to the following embodiments. The drawings to which reference is made in the description of the embodiments are schematic, and the following description should be taken into consideration for determination of, for example, the size proportion of components depicted in the drawings.

A battery electrode according to the present disclosure is suitable as an electrode for a non-aqueous electrolyte secondary battery such as a lithium ion battery, but can also be used for a battery including an aqueous electrolyte solution. The electrode can be used not only for a secondary battery, but can also be used for a primary battery. In the following description, a non-aqueous electrolyte secondary battery and a non-aqueous electrolyte secondary battery electrode (especially, positive electrode) will be described by way of example.

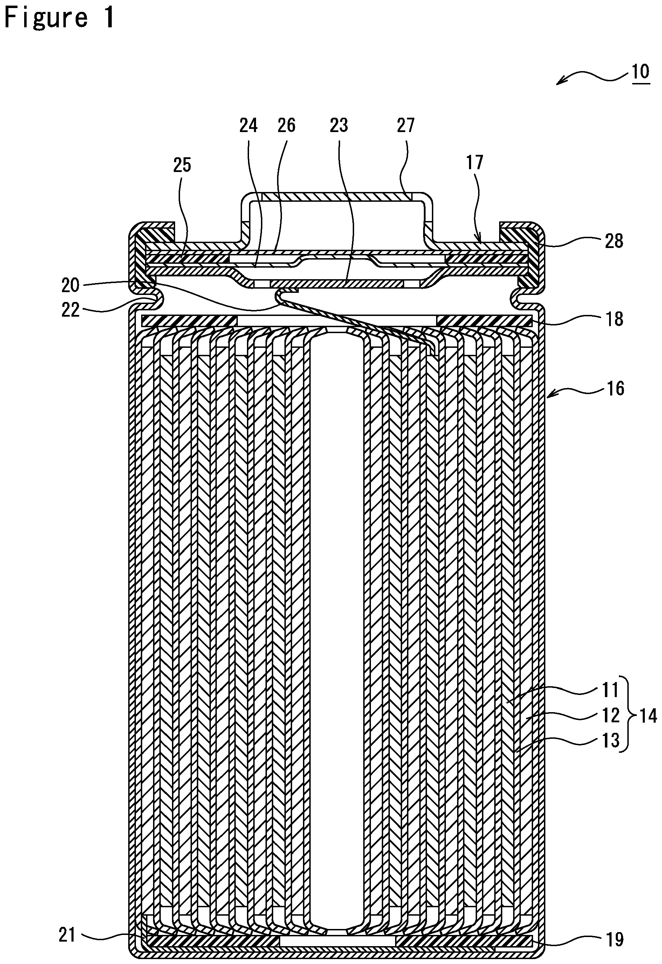

FIG. 1 is a cross-sectional view of a non-aqueous electrolyte secondary battery 10 according to an example embodiment. As illustrated in FIG. 1, the non-aqueous electrolyte secondary battery 10 includes a wound electrode assembly 14, a non-aqueous electrolyte solution, and an outer can 16 that receives the electrode assembly 14 and the electrolyte. The electrode assembly 14 includes a positive electrode 11, a negative electrode 12, and a separator 13, and has a wound configuration in which the positive electrode 11 and the negative electrode 12 are spirally wound with the separator 13 therebetween. The outer can 16 is a metal container having a cylindrical shape with a closed bottom, which is open on one side in an axial direction, the opening of the outer can 16 being closed by a sealing assembly 17. In the following description, for ease of description, the term "upper" refers to the side toward the sealing assembly 17 of the battery, and the term "lower" refers to the side toward the bottom of the outer can 16.

It should be noted that the outer housing of the battery is not limited to a cylindrical outer can. For example, the outer housing may be a rectangular outer can or may be composed of a laminate sheet including a metal layer and a resin layer. The electrode assembly may be a laminated electrode assembly that includes multiple positive electrodes and multiple negative electrodes alternately laminated with a separator therebetween.

The non-aqueous electrolyte solution includes a non-aqueous solvent and an electrolyte salt dissolved in the non-aqueous solvent. Examples of the non-aqueous solvent include esters, ethers, nitriles, amides, and mixed solvents of two or more thereof. The non-aqueous solvent may contain a halogen-substituted product of these solvents in which hydrogens of the solvents are, at least in part, substituted with a halogen atom such as fluorine. Examples of the electrolyte salt include a lithium salt such as LiPF₆.

The positive electrode 11, the negative electrode 12, and the separator 13 of the electrode assembly 14 are long strips of material that are laminated alternately in the radial direction of the electrode assembly 14 as they are spirally wound. To prevent precipitation of lithium, the negative electrode 12 has a size slightly larger than the positive electrode 11. More specifically, the negative electrode 12 has longer lengths than the positive electrode 11 both in the length direction and in the width direction (shorter length direction). Two separators 13, which have a size slightly larger than at least the positive electrode 11, are disposed so that, for example, the positive electrode 11 is interposed between the two separators 13. The electrode assembly 14 includes a positive electrode lead 20 that is connected to the positive electrode 11 by, for example, welding, and a negative electrode lead 21 that is connected to the negative electrode 12 by, for example, welding.

Insulating plates 18 and 19 are respectively disposed on upper and lower sides of the electrode assembly 14. In the example illustrated in FIG. 1, the positive electrode lead 20 passes through a through hole in the insulating plate 18 and extends toward the sealing assembly 17, and the negative electrode lead 21 passes outside the insulating plate 19 and extends toward the bottom of the outer can 16. The positive electrode lead 20 is connected to an underside of an internal terminal plate 23 of the sealing assembly 17 by, for example, welding, and a cap 27 that is the top plate of the sealing assembly 17 electrically connected to the internal terminal plate 23 serves as a positive electrode terminal. The negative electrode lead 21 is connected to an inner surface of the bottom of the outer can 16 by, for example, welding, and the outer can 16 serves as a negative electrode terminal.

A gasket 28 is provided between the outer can 16 and the sealing assembly 17, thereby maintaining airtightness of the space inside the battery. The outer can 16 has a groove or inward projection 22, which is an inwardly protruding portion of the side surface of the outer can 16, and the groove or inward projection 22 supports the sealing assembly 17. The groove or inward projection 22 preferably has an annular shape extending along the circumference of the outer can 16, and supports the sealing assembly 17 on its upper surface. The sealing assembly 17 is fixed to an upper portion of the outer can 16 via the groove or inward projection 22 and an opening edge portion of the outer can 16 that is swaged to the sealing assembly 17.

The sealing assembly 17 has a configuration in which the internal terminal plate 23, a lower vent member 24, an insulating member 25, an upper vent member 26, and the cap 27 are stacked in that order from the side on which the electrode assembly 14 is located. The components of the sealing assembly 17 have, for example, either a disc shape or a ring shape and are, except for the insulating member 25, electrically connected to each other. The lower vent member 24 and the upper vent member 26 are connected to each other at their center portions, and the insulating member 25 is interposed between their peripheral portions. In response to an increase in internal pressure of the battery due to abnormal heat generation, the lower vent member 24 breaks as it is deformed so as to push the upper vent member 26 toward the cap 27, resulting in an interruption of the electric current path between the lower vent member 24 and the upper vent member 26. In response to a further increase in internal pressure, the upper vent member 26 breaks, letting gas escape through an opening of the cap 27.

The positive electrode 11, the negative electrode 12, and the separator 13 of the electrode assembly 14, especially the positive electrode 11, will now be described in detail.

### [Positive Electrode]

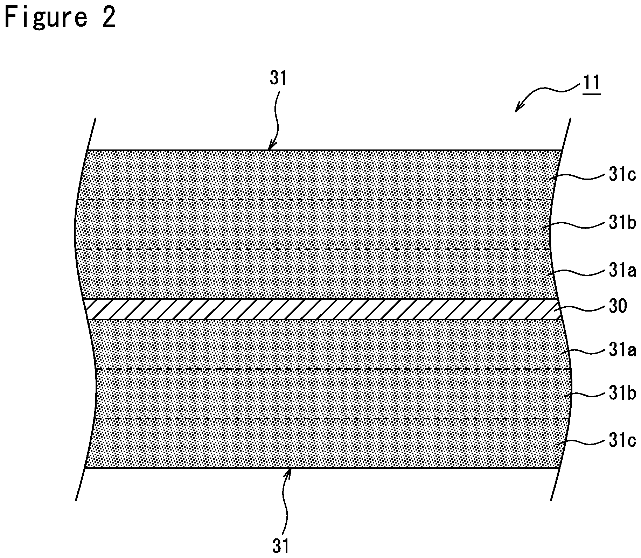

FIG. 2 is a cross-sectional view of the positive electrode 11 according to an example embodiment. As illustrated in FIG. 2, the positive electrode 11 includes a positive electrode core 30 and a positive electrode mixture layer 31 that is disposed on the surface of the positive electrode core 30. Examples of the positive electrode core 30 include foil of metal that is stable in an electric potential range of the positive electrode 11, such as aluminum or an aluminum alloy, and a film having such metal disposed in its surface layer. The positive electrode mixture layer 31 contains a positive electrode active material, a binder, and a conductive agent, and is preferably disposed on both sides of the positive electrode core 30. Examples of the conductive agent include carbon materials such as carbon black, acetylene black, Ketjenblack, graphite, and carbon nanotubes. The content of the conductive agent is preferably 0.01% to 5% by mass relative to the mass of the positive electrode mixture layer 31. The conductive agent may be used alone but may also form a composite with, for example, the active material beforehand.

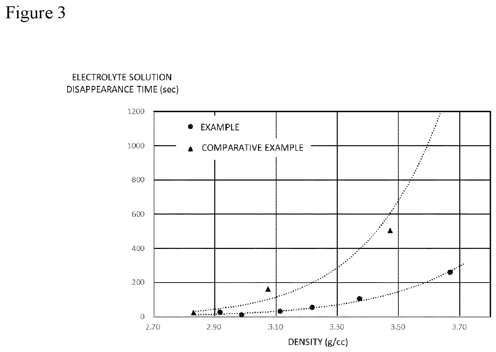

The positive electrode mixture layer 31 is formed by bonding a positive electrode mixture sheet 43, 43x, or 53 prepared through a method of manufacture described later, to the surface of the positive electrode core 30. When the positive electrode mixture layer 31 is composed of a positive electrode mixture sheet 43 or 43x, the positive electrode mixture layer 31 contains, for example, a fibrous binder as the binder. The use of a fibrous binder makes it easy to roll and mold a positive electrode mixture 40 (see, for example, FIG. 3, which will be described later) into a sheet. It should be noted that the term "positive electrode mixture layer 31" used in the present specification can be read as "positive electrode mixture sheet 43, 43x, or 53".

The positive electrode mixture layer 31 contains a positive electrode active material as the main component (the component with the highest mass ratio). The content of the positive electrode active material is preferably 85% to 99% by mass and more preferably 90% to 98% by mass relative to the mass of the positive electrode mixture layer 31. The volume-based median diameter (D50) of the positive electrode active material is, for example, 1 to 30 µm and preferably 2 to 15 µm. The thickness of the positive electrode mixture layer 31 is, for example, 30 to 300 µm, preferably 30 to 120 µm, and more preferably 50 to 100 µm.

A lithium transition metal composite oxide is used as the positive electrode active material. Examples of metal elements contained in the lithium transition metal composite oxide include Ni, Co, Mn, Al, B, Mg, Ti, V, Cr, Fe, Cu, Zn, Ga, Sr, Zr, Nb, In, Sn, Ta, and W. The lithium transition metal composite oxide preferably contains, among others, at least one of Ni, Co, and Mn. Suitable examples of the composite oxide include a lithium transition metal composite oxide that contains Ni, Co, and Mn and a lithium transition metal composite oxide that contains Ni, Co, and Al.

The fibrous binder is composed of a resin that contains, for example, polytetrafluoroethylene (PTFE) as the main component, and is obtained through fibrillation of PTFE particles. The content of the fibrous binder is preferably 0.05% to 5% by mass relative to the mass of the positive electrode mixture layer 31. The positive electrode mixture layer 31 may contain a non-fibrillated (non-fibrous) binder. Examples of the non-fibrillated binder include polyvinylidene fluoride (PVdF).

The positive electrode mixture layer 31 includes voids. Voids formed inside the positive electrode mixture layer 31 communicate to, for example, the surface of the positive electrode mixture layer 31. These voids serve as passages for the electrolyte solution and improve the penetration of the electrolyte solution into the positive electrode mixture layer 31. Assuming that the positive electrode mixture layer 31 of the positive electrode 11 is divided into three equal parts in the thickness direction, the three equal parts being defined as a first region 31a, a second region 31b, and a third region 31c in that order from the side on which the positive electrode core 30 is located, the second region 31b has a porosity (b) that is higher than a porosity (a) of the first region 31a. The term "porosity" as used herein represents the ratio of voids in the positive electrode mixture layer 31.

In other words, the positive electrode mixture layer 31 includes more voids in a center portion of the layer in the thickness direction than in the vicinity of the positive electrode core 30. Although a positive electrode mixture layer of a positive electrode produced through a conventional typical wet process includes more voids in the vicinity of a positive electrode core so that voids are fewer with distance from the core, if it is produced through a method of manufacture described later, more voids can be formed in the second region 3 1b than in the first region 31a. This increases the penetration of the electrolyte solution into the positive electrode mixture layer 31, thereby improving battery high rate performance.

The porosity of a positive electrode mixture layer is measured by the following method:
(1) A cross section of the positive electrode mixture layer is exposed using an ion milling system (for example, IM4000PLUS from Hitachi High-tech).
(2) A backscattered electron image of the exposed cross section of the positive electrode mixture layer is captured using a scanning electron microscope (SEM). The backscattered electron image is captured at 1,000 to 5,000-fold magnification.
(3) An SEM image of the cross section of the positive electrode mixture layer is imported into a computer and color-coded based on contrast into three colors, an intermediate color for voids, using image analysis software (for example, ImageJ from USANational Institutes of Health).
(4) A measurement target region is selected from the processed image, a total area of voids in this region is obtained, and the ratio of voids in the measurement target region (porosity) is calculated.

As described above, the positive electrode mixture layer 31 has a higher porosity in the second region 31b than in the first region 31a, and a difference (b-a) between the porosity (b) of the second region 31b and the porosity (a) of the first region 31a is, for example, 0.5% or greater. However, the difference (b-a) in porosity is preferably not too large: preferably 10% or less and more preferably 5% or less.

The porosity (b) of the second region 3 1b may be higher than a porosity (c) of the third region 31c. A difference (b-c) between the porosity (b) and the porosity (c) is, for example, 0.5% or greater. The difference (b-c) in porosity is preferably not too large: preferably 10% or less and more preferably 5% or less.

A difference (a-c) between the porosity (a) of the first region 31a and the porosity (c) of the third region 31c is, for example, within the range of ± 1%. The porosity (a) and the porosity (c) may be substantially the same. In a suitable example, the positive electrode mixture layer 31 satisfies the relationship that the porosity (a) ≈ the porosity (c) < the porosity (b), and voids are present evenly throughout the positive electrode mixture layer 31 without too many somewhere in the layer or too few elsewhere. This facilitates penetration of the electrolyte solution throughout the positive electrode mixture layer 31.

The porosity (c) of the third region 31c may be higher than the porosity (b) of the second region 31b, and the porosity of the positive electrode mixture layer 31 may be such that the porosity (a) < the porosity (b) < the porosity (c). This also provides good penetration of the electrolyte solution. A difference (c-b) between the porosity (c) and the porosity (b) is, for example, 0.5% or greater. The difference (c-b) in porosity is preferably 10% or less and more preferably 5% or less.

In terms of, for example, increased capacity, the overall porosity of the positive electrode mixture layer 31 is preferably 40% or less and more preferably 30% or less. However, in terms of, for example, improved penetration of the electrolyte solution, the overall porosity of the positive electrode mixture layer 31 is preferably 5% or greater and more preferably 10% or greater.

The content of the binder in the positive electrode mixture layer 31 is preferably either substantially uniform throughout the layer or higher toward the side on which the positive electrode core 30 is located. This improves the bond strength of the positive electrode mixture layer 31 with the positive electrode core 30, and also further improves the penetration of the electrolyte solution. It should be noted that, when a positive electrode is produced through a conventional typical wet process, migration of the binder occurs during the drying of the applied film, resulting in an increase in the amount of the binder in the vicinity of the surface compared to that in the vicinity of the core.

In a suitable example of the positive electrode mixture layer 31, the ratio ((a-c)x100/(a+b+c)) of a difference between the content (a) of the binder in the first region 31a and the content (c) of the binder in the third region 31c to the total content (a+b+c) of the binder in each of the regions is within the range of ± 5%. The content (a) and the content (c) may be substantially the same.

The ratio ((a-b)x100/(a+b+c)) of a difference (a-b) between the content (a) and the content (b) of the binder in the second region 3 1b to the content (a+b+c) is within the range of ± 5%. Similarly, the ratio ((b-c)x100/(a+b+c)) of a difference between the content (b) and the content (c) to the content ((a+b+c)) is within the range of ± 5%. That is, in a suitable example, the positive electrode mixture layer 31 satisfies the relationship that the content (a) ≈ the content (b) ≈ the content (c), the binder is present evenly throughout the positive electrode mixture layer 31 without too much somewhere in the layer or too little elsewhere.

In another suitable example of the positive electrode mixture layer 31, the content of the binder increases in the order of the third region 31c, the second region 31b, and the first region 31a (the content (c) < the content (b) < the content (a)). However, the difference in content between the regions is preferably not too large: each of the above-described ratios ((a-c)x100/(a+b+c)) and ((b-c)x100/(a+b+c)) is preferably 20% or less and more preferably 10% or less.

The density of the positive electrode mixture layer 31 is not particularly limited but, when the density is higher, advantages obtainable by the present disclosure are more notable. The density of the positive electrode mixture layer 31 is, for example, 3.5 g/cc or greater, preferably 3.6 g/cc or greater, and more preferably 3.8 g/cc or greater. The maximum density of the positive electrode mixture layer 31 is, for example, 4.3 g/cc.

FIG. 3 illustrates a relationship between the density of the positive electrode mixture layer 31 (according to an example) and the penetration of a non-aqueous electrolyte solution. As a comparative, the penetration in a positive electrode produced through a conventional typical wet process is shown. In this test, multiple samples having different densities in the mixture layers were prepared, propylene carbonate (PC) was used in place of a non-aqueous electrolyte solution, and the time that elapsed after a predetermined amount of PC was dripped onto each of the mixture layers until PC had penetrated and disappeared was measured. The measured time indicates that the shorter it is, the better the penetration of the electrolyte solution. The porosity of the positive electrode mixture layer and the content of the binder in an example and a comparative example used in this test are shown in Table 1 (as the positive electrode active material, the same material was used, and the same amount of it was added).

**[Table 1]**

| | Positive electrode mixture layer according to an example | Positive electrode mixture layer according to a comparative example |
|---|---|---|
| Porosity of the first region | 25.9% | 31.5% |
| Porosity of the second region | 26.8% | 28.6% |
| Porosity of the third region | 25.1% | 29.5% |
| Binder content in the first region | 33% | 17% |
| Binder content in the second region | 33% | 31% |
| Binder content in the third region | 34% | 52% |

It can be seen from FIG. 3 that a positive electrode mixture layer according to an example has a shorter liquid disappearance time and better penetration of the electrolyte solution than a positive electrode mixture layer according to a comparative example. While an increased density of the positive electrode mixture layer according to the comparative example causes the penetration of the electrolyte solution to decrease sharply, the positive electrode mixture layer according to the example reduces the decrease in penetration and provides good penetration even if it has a high density.

In the positive electrode 11, the positive electrode active material may bite into the positive electrode core 30. The maximum bite depth D of the positive electrode active material is, for example, 30% or greater of the thickness of the positive electrode core 30, and is 6 µm or greater in a specific example. The bite depth D of the positive electrode active material herein represents a length along the thickness direction of the positive electrode core 30 as measured from the surface of the positive electrode core 30 to the deepest point to which the positive electrode active material bites. The bite depth D can be measured by observing a cross section of the positive electrode 11 using an SEM. It should be noted that the maximum bite depth D can be controlled using, for example, the softening temperature of the positive electrode core 30 or the heating temperature and pressing pressure of a heat pressing process, which will be described later.

### [Negative Electrode]

The negative electrode 12 includes a negative electrode core that is made of, for example, metal foil and a negative electrode mixture layer that is disposed on the surface of the negative electrode core. Typically, copper foil is used as the core of the negative electrode. The negative electrode 12 may be formed using a conventionally known electrode plate produced through a wet process, or may be formed using an electrode plate that includes a negative electrode mixture sheet produced through a method described later. The negative electrode 12 may have a structure that is similar to that of the above-described positive electrode 10 and includes a negative electrode mixture layer in which the porosity of the second region is higher than the porosity of the first region.

The negative electrode active material is, for example, a carbon-based active material including natural graphite such as flake graphite, massive graphite, and earthy graphite, and artificial graphite such as massive artificial graphite (MAG) and graphitized mesophase carbon microbeads (MCMB). The negative electrode active material may be, for example, a Si-based active material that forms an alloy with lithium. It should be noted that carbon-based active materials have a higher electron conduction than positive electrode active materials; therefore, the negative electrode 12 may contain no conductive agent.

### [Separator]

A porous sheet having ion permeability and insulating properties is used as the separator 13. Specific examples of the porous sheet include a microporous thin film, woven fabric, and non-woven fabric. Suitable examples of the material for the separator 13 include polyethylene, polypropylene, and other polyolefins and cellulose. The separator 13 may have either a single-layer structure or a multi-layer structure. The separator 13 may have, for example, a heat-resistant layer on its surface.

### [Method of Manufacturing Positive Electrode]

A method of manufacturing the positive electrode 11 will now be described in detail. In the following description, a method of manufacturing the positive electrode 11 that contains a conductive agent will be described by way of example, but the following method of manufacture may also be similarly used for the production of the negative electrode. For the negative electrode, the positive electrode active material is replaced with a negative electrode active material, and no conductive agent may be added to the mixture sheet.

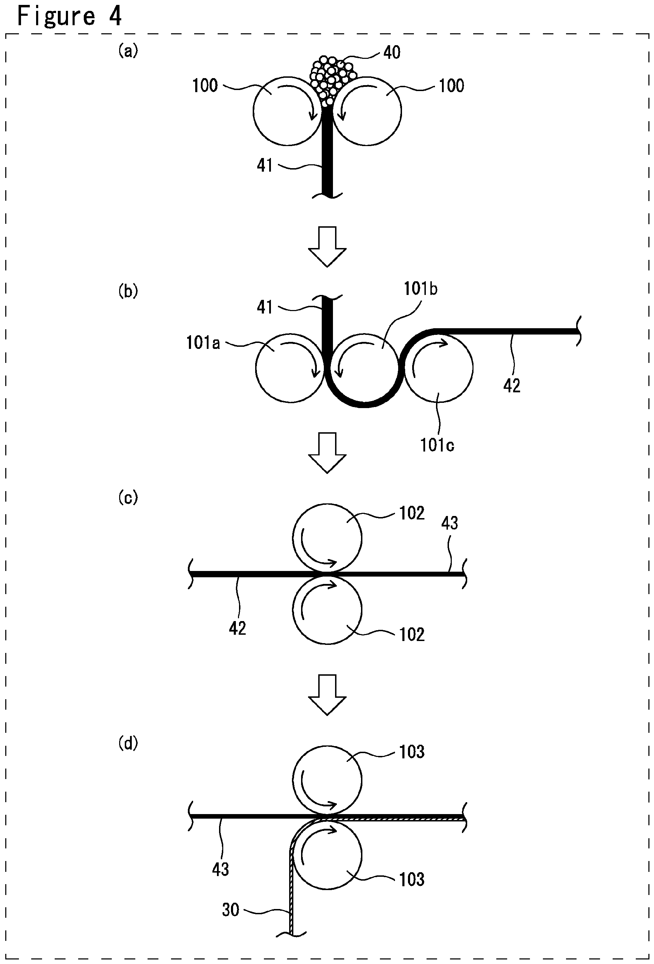

FIG. 4 illustrates an example of a method of manufacturing the positive electrode 11. In the process of manufacturing the positive electrode 11, as illustrated in FIG. 4, the positive electrode 11 is produced by rolling powder positive electrode mixture 40 and molding it into a sheet to prepare a positive electrode mixture sheet 43, and then laminating the positive electrode mixture sheet 43 to the positive electrode core 30. In this process, the sheet is compressed firmly to increase the density before the lamination of the positive electrode mixture sheet 43 to the positive electrode core 30. The positive electrode mixture sheet 43 (positive electrode mixture layer 31) having the above-described porosity distribution is prepared in this manner.

The example illustrated in FIG. 4 is a dry process. A dry process is a process in which an active material and a binder are mixed together without using a solvent, and the solid content concentration is substantially 100% when the active material and the binder are mixed together. One or more materials other than the active material and the binder, such as a conductive agent, may be added during the mixing, and the solid content concentration during the mixing is substantially 100% even when one or more materials other than the active material and the binder are added.

The positive electrode mixture 40 is prepared by, for example, introducing a positive electrode active material, binder particles, and a conductive agent into a mixing machine, and mixing these materials together while fibrillating the binder particles. The positive electrode mixture 40 contains a particulate active material and a fibrous binder, and the fibrous binder adheres to the surfaces of particles of the active material and is entangled with the active material. In other words, the active material is held by the fibrous binder that is present in the form of mesh. This configuration can also be observed in the positive electrode mixture sheet 43.

The binder particles are preferably particles that contain polytetrafluoroethylene (PTFE) as the main component. PTFE, which is easily fibrillated, is suitable as the binder for the positive electrode mixture sheet 43. The active material and the conductive agent are mixed together in a short time using PTFE particles having, for example, a volume-based median diameter (D50) of 5 to 100 µm. This reduces particle breakage of the active material, and the positive electrode mixture 40 with a small amount of the conductive agent incorporated in the fibrous binder can be prepared. For example, a cutter mill, a pin mill, a bead mill, a microparticle composite forming apparatus, a granulating machine, or a kneading machine can be used as the mixing machine.

As illustrated in FIG. 4, (a) to (c), the positive electrode mixture sheet 43 is prepared through multiple steps of rolling and compression. First, the positive electrode mixture 40 is rolled using a pair of rolls 100 and molded into a sheet. The two rolls 100 are disposed with a predetermined gap (for example, 1 to 3 mm) between them and rotate in the same direction (for example, at a circumferential velocity of 0.5 to 1.5 m/minute). The positive electrode mixture 40 is rolled as it is fed into the gap between the two rolls 100, and is molded into a positive electrode mixture sheet 41. Second, the positive electrode mixture sheet 41 is further rolled to prepare a positive electrode mixture sheet 42 having a smaller thickness and a higher density than those of the positive electrode mixture sheet 41. Third, the positive electrode mixture sheet 42 is further compressed to prepare the positive electrode mixture sheet 43 having a smaller thickness and a higher density than the positive electrode mixture sheet 42.

The positive electrode mixture sheet 41 is rolled using three rolls 101a, 101b, and 101c. In the example illustrated in FIG. 4, these three rolls are disposed in alignment with each other with a predetermined gap (for example, 50 to 200 µm) between them. The rolls 101a and 101b rotate in the same direction, and the roll 101c rotates in the direction that is reverse to that of the two rolls 101a and 101b. The positive electrode mixture sheet 41 is rolled as it passes between the rolls 101a and 101b and between the rolls 101b and 101c, and is molded into the positive electrode mixture sheet 42. The three rolls may have different circumferential velocity ratios; for example, the circumferential velocity of the roll 101b may be 1.5 to 3 times the circumferential velocity of the roll 101a, and the circumferential velocity of the roll 101c may be 1.2 to 2 times the circumferential velocity of the roll 101b.

The positive electrode mixture sheet 42 is compressed using a pair of rolls 102 (for example, the gap is set to 0 µm). The positive electrode mixture sheet 42 is compressed by a force that is greater than those applied in the first and second rolling steps, and is molded into the positive electrode mixture sheet 43 that constitutes the positive electrode mixture layer 31. The thickness, density, and porosity distribution of the positive electrode mixture sheet 43 are determined through this compression process and remain substantially unchanged in the subsequent process in which it is bonded to the positive electrode core 30. The press linear pressure applied by the rolls 102 is, for example, 10 or more times, preferably 15 to 25 times, the press linear pressure applied in the first and second rolling steps, and is 1.0 to 3 t/cm in a specific example. The positive electrode mixture sheet 42 may be compressed while being heated at a temperature of 50 to 200 °C.

As illustrated in FIG. 4(d), the positive electrode mixture sheet 43 is laminated to the positive electrode core 30, thereby preparing the positive electrode 11 in which the positive electrode mixture layer 31 that is composed of the positive electrode mixture sheet 43 is provided on the surface of the positive electrode core 30. In the example illustrated in FIG. 4, a laminate of the positive electrode core 30 and the positive electrode mixture sheet 43 is heat pressed using a pair of rolls 103, thereby bonding the positive electrode mixture sheet 43 to the surface of the positive electrode core 30. The press linear pressure applied by the rolls 103 is preferably not greater than the press linear pressure applied by the rolls 102. The positive electrode mixture sheet 43 is preferably heated at a temperature not higher than the melting point of the binder, and may be heated at a temperature not lower than the softening temperature of the positive electrode core 30 and not higher than the melting point of the fibrous binder. The heat pressing temperature is set to, for example, 150 to 250 °C.

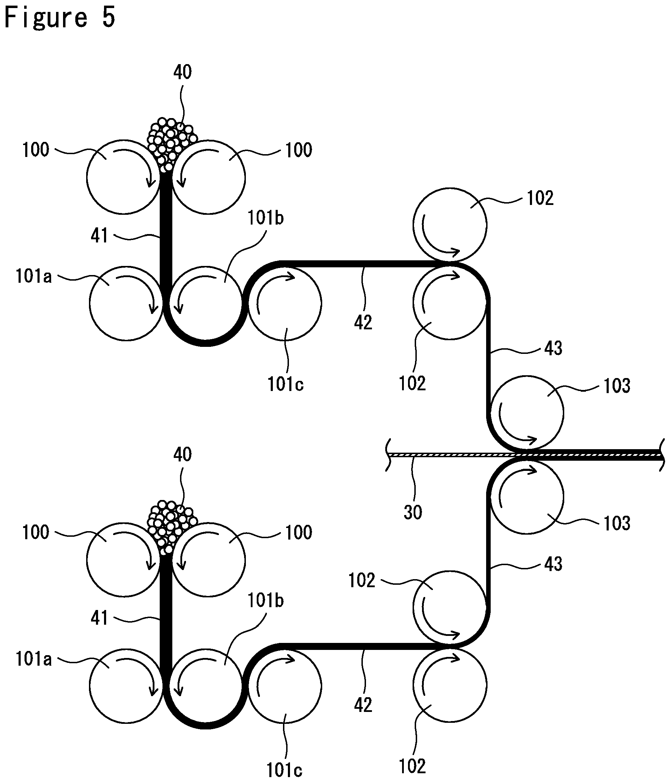

The positive electrode mixture sheet 43 is bonded to both sides of the positive electrode core 30. In the example illustrated in FIG. 4, one sheet is bonded to one side of the positive electrode core 30, and then another sheet is bonded to the other side of the positive electrode core 30. Referring to FIG. 5, two positive electrode mixture sheets 43 may be simultaneously bonded to both sides of the positive electrode core 30. In the example illustrated in FIG. 5, the positive electrode core 30 and the two positive electrode mixture sheets 43 are fed between the pair of rolls 103, and the two positive electrode mixture sheets 43 are simultaneously heat pressed.

The positive electrode mixture layer 31 of the positive electrode 11 produced through the above-described process has a porosity distribution in which the porosity (a) of the first region 31a ≈ the porosity (c) of the third region 31c < the porosity (b) of the second region 31b. The difference between the porosity (b) and the porosities (a, c) is not large, voids are present evenly throughout the positive electrode mixture layer 31, and the penetration of the electrolyte solution is good. Such a porosity distribution is obtained by compressing the positive electrode mixture sheet 42 while not being bound to, for example, the positive electrode core 30. In this process, as no solvent is used for preparation of the positive electrode mixture sheet 43, migration of the binder does not occur, and the binder is present substantially uniformly throughout the positive electrode mixture layer 31.

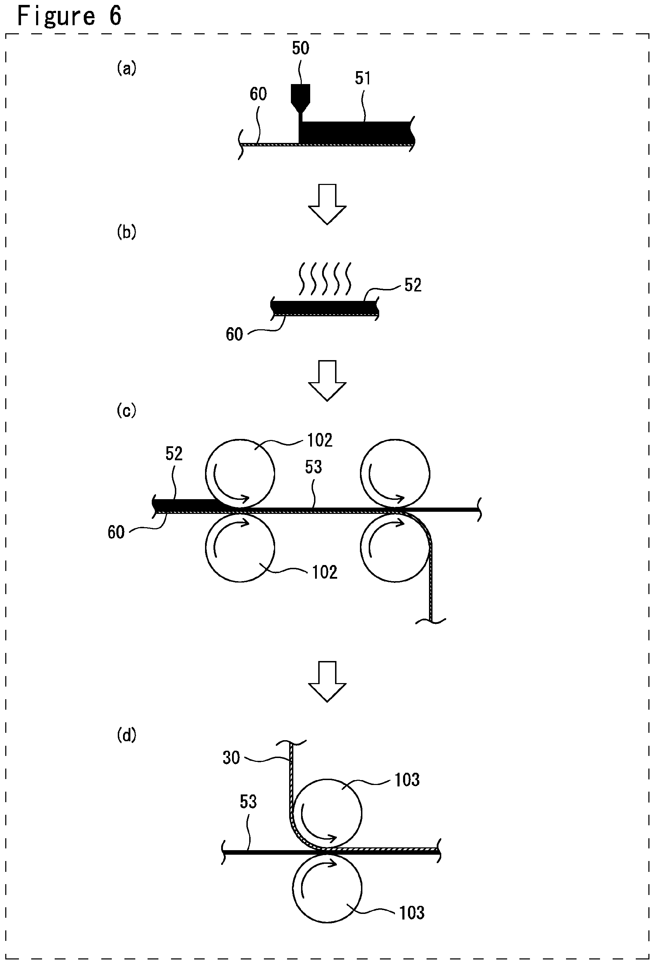

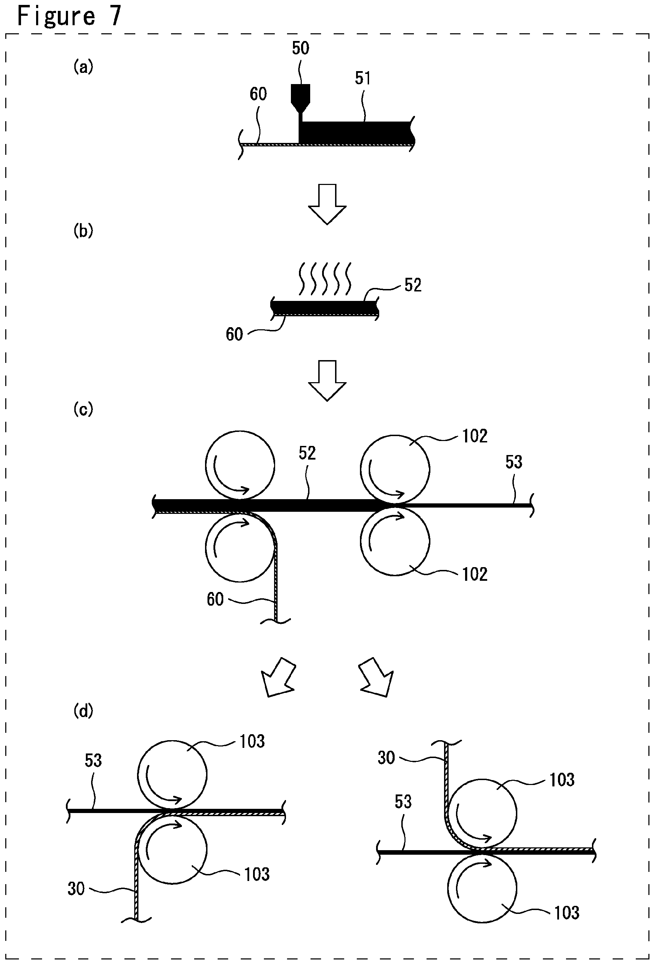

FIGs. 6 and 7 illustrate other examples of methods of manufacturing the positive electrode 11. As illustrated in FIGs. 6 and 7, the positive electrode 11 can be manufactured using a positive electrode mixture sheet 53 prepared through a wet process.

As illustrated in FIG. 6, (a) to (c), the positive electrode mixture sheet 53 is prepared by applying positive electrode mixture slurry 50 containing a positive electrode active material, a binder, a conductive agent, and a solvent to form an applied film 51 on a releasing film 60, drying the applied film 51 to form a positive electrode mixture sheet 52, and then compressing this sheet. Subsequently, as illustrated in FIG. 6(d), the positive electrode mixture sheet 53 is laminated to the positive electrode core 30, thereby preparing the positive electrode 11 in which the positive electrode mixture layer 31 that is composed of the positive electrode mixture sheet 53 is provided on the surface of the positive electrode core 30. It should be noted that the compression of the positive electrode mixture sheet 52 and the heat pressing of the laminate of the positive electrode core 30 and the positive electrode mixture sheet 53 can be performed under similar conditions to those of the method of manufacture illustrated in FIG. 4.

In this process, in which the positive electrode mixture slurry 50 is used, as it is necessary to perform the drying step for volatilizing and removing the solvent, migration of the binder occurs. As a result, the positive electrode mixture sheet 52 has, in the thickness direction, a binder distribution in which the amount of the binder increases with distance from the releasing film 60. In this process, as illustrated in FIG. 6(c), the positive electrode mixture sheet 52 is compressed while being in the form of a laminate disposed on the releasing film 60. In other words, as the positive electrode mixture sheet 52 is compressed while being bound to the releasing film 60, the positive electrode mixture sheet 52 has a distribution of voids in which the closer to the releasing film 60, the more voids.

In the example illustrated in FIG. 6, peeling off the positive electrode mixture sheet 53 from the releasing film 60 is followed by heat pressing of the positive electrode mixture sheet 53 disposed on the positive electrode core 30 with the surface of the positive electrode mixture sheet 53 that is opposite the releasing film 60 facing toward the positive electrode core 30. The positive electrode mixture layer 31 of the positive electrode 11 produced through the process illustrated in FIG. 6 has a porosity distribution in which the porosity (a) of the first region 31a < the porosity (b) of the second region 31b < the porosity (c) of the third region 31c. It also has a binder distribution in which the content (a) of the binder in the first region 31a > the content (b) of the binder in the second region 3 1b > the content (c) of the binder in the third region 31c.

As illustrated in FIG. 7(c), the positive electrode mixture sheet 53 may be prepared by peeling off the positive electrode mixture sheet 52 from the releasing film 60 and then compressing the positive electrode mixture sheet 52. In this embodiment, as the positive electrode mixture sheet 52 is compressed while not being bound to the releasing film 60, the positive electrode mixture sheet 53 has a porosity distribution in which the porosity (a) of the first region 31a ≈ the porosity (c) of the third region 31c < the porosity (b) of the second region 31b. It should be noted that this embodiment is similar to the above in that migration of the binder occurs due to the drying step.

As illustrated in FIG. 7(d), the positive electrode mixture sheet 53 disposed on the positive electrode core 30 may be heat pressed with the surface of the positive electrode mixture sheet 53 that is closer to the releasing film 60 facing toward the positive electrode core 30. Alternatively, the positive electrode mixture sheet 53 disposed on the positive electrode core 30 may be heat pressed with the surface of the positive electrode mixture sheet 53 that is opposite the releasing film 60 facing toward the positive electrode core 30. In the former, the positive electrode mixture layer 31 has a binder distribution in which the content (a) of the binder in the first region 31a < the content (b) of the binder in the second region 31b < the content (c) of the binder in the third region 31c. However, in the latter, it has a binder distribution in which the content (a) > the content (b) > the content (c).

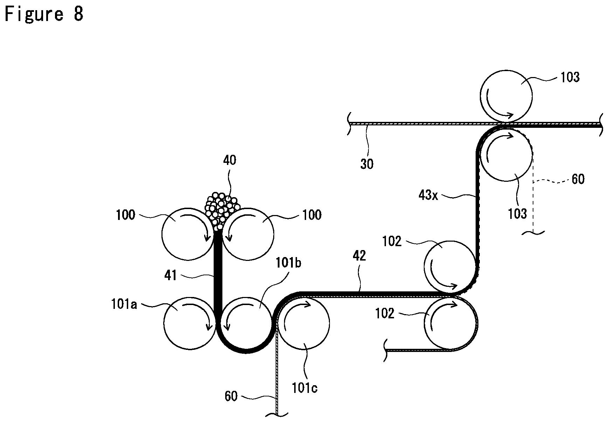

FIG. 8 illustrates another example of a method of manufacturing the positive electrode 11. The process illustrated in FIG. 8 differs from the process illustrated in FIG. 4 in that the releasing film 60 is used in a dry process for preparing a positive electrode mixture sheet from the powder positive electrode mixture 40. In the example illustrated in FIG. 8, the releasing film 60 is fed between the rolls 101b and 101c and laminated to the positive electrode mixture sheet 42, and the positive electrode mixture sheet 42 that is disposed on the releasing film 60 is compressed by the pair of rolls 102. A positive electrode mixture sheet 43x prepared in this embodiment has a porosity distribution in which the closer to the releasing film 60, the more voids.

In the example illustrated in FIG. 8, the positive electrode mixture sheet 43x disposed on the positive electrode core 30 is heat pressed with the surface of the positive electrode mixture sheet 43x that is opposite the releasing film 60 facing toward the positive electrode core 30. In this embodiment, the positive electrode mixture layer 31 has a porosity distribution in which the porosity (a) of the first region 31a < the porosity (b) of the second region 31b < the porosity (c) of the third region 31c.

It should be noted that, although, in the example illustrated in FIG. 8, the releasing film 60 is peeled off after the compression of the positive electrode mixture sheet 42 and before the heat pressing of the positive electrode mixture sheet 43x, the releasing film 60 may be peeled off after the heat pressing. Similarly, in the process illustrated in FIG. 6, the releasing film 60 may be peeled off after the heat pressing.

### REFERENCE SIGNS LIST

10 secondary battery
11 positive electrode
12 negative electrode
13 separator
14 electrode assembly
16 outer can
17 sealing assembly
18, 19 insulating plate
20 positive electrode lead
21 negative electrode lead
22 groove or inward projection
23 internal terminal plate
24 lower vent member
25 insulating member
26 upper vent member
27 cap
28 gasket
30 positive electrode core
31 positive electrode mixture layer
31a first region
31b second region
31c third region
40 positive electrode mixture
41, 42, 43, 43x positive electrode mixture sheet
50 positive electrode mixture slurry
51 applied film
52, 53 positive electrode mixture sheet
60 releasing film
100, 101, 102a, 101b, 101c, 103 roll

## Claims

1. A battery electrode comprising:
a core; and
a mixture layer containing an active material and a binder, the mixture layer being disposed on a surface of the core,
wherein assuming that the mixture layer is divided into three equal parts in a thickness direction, the three equal parts being defined as a first region, a second region, and a third region in that order from a side on which the core is located, a porosity of the second region is higher than a porosity of the first region.

2. The battery electrode according to claim 1, wherein a difference (a-c) between the porosity (a) of the first region and a porosity (c) of the third region is within the range of ± 1%.

3. The battery electrode according to claim 1 or 2, wherein a difference (b-a) between the porosity (b) of the second region and the porosity (a) of the first region is from 0.5% to 10%.

4. The battery electrode according to any one of claims 1 to 3,
wherein the porosity (b) of the second region is higher than a porosity (c) of the third region, and
wherein a difference (b-c) between the porosity (b) of the second region and a porosity (c) of the third region is from 0.5% to 10%.

5. The battery electrode according to claim 1, wherein a porosity (c) of the third region is higher than the porosity (b) of the second region.

6. The battery electrode according to any one of claims 1 to 5, wherein a ratio of a difference between a content (a) of the binder in the first region and a content (c) of the binder in the third region to a total content (a+b+c) of the binder in each of the regions is within the range of ± 5%.

7. The battery electrode according to any one of claims 1 to 6, wherein a ratio of a difference between a content (a) of the binder in the first region and a content (b) of the binder in the second region to a total content (a+b+c) of the binder in each of the regions is within the range of ± 5%.

8. The battery electrode according to any one of claims 1 to 7, wherein a ratio of a difference between a content (b) of the binder in the second region and a content (c) of the binder in the third region to a total content (a+b+c) of the binder in each of the regions is within the range of ± 5%.

9. The battery electrode according to any one of claims 1 to 5, wherein a content of the binder in the mixture layer increases in the order of the third region, the second region, and the first region.

10. The battery electrode according to any one of claims 1 to 9, wherein the mixture layer has an overall porosity of 40% or less.

11. A battery comprising:
the battery electrode according to any one of claims 1 to 10; and
an electrolyte solution.
